(19) Europäisches Patentamt
European Patent Office
Office européen des brevets

(11) **EP 1 560 065 B1**

(12) **EUROPEAN PATENT SPECIFICATION**

(45) Date of publication and mention
of the grant of the patent:
**18.01.2017 Bulletin 2017/03**

(51) Int Cl.:
*H04B 10/071* (2013.01)    *H01S 3/067* (2006.01)
*H04B 10/077* (2013.01)    *H04B 10/079* (2013.01)
*H01S 3/13* (2006.01)    *H01S 3/30* (2006.01)
*H01S 3/00* (2006.01)

(21) Application number: **03773423.3**

(22) Date of filing: **07.11.2003**

(86) International application number:
**PCT/CN2003/000938**

(87) International publication number:
**WO 2004/042467 (21.05.2004 Gazette 2004/21)**

(54) **OPTICAL AMPLIFICATION SAFETY CONTROL METHOD AND APPARATUS**

OPTISCHES VERSTÄRKUNGSSICHERHEITSSTEUERVERFAHREN UND VORRICHTUNG

PROCEDE ET APPAREIL DE CONTROLE DE SECURITE PAR AMPLIFICATION OPTIQUE

(84) Designated Contracting States:
**FR**

(30) Priority: **08.11.2002 CN 02145220**

(43) Date of publication of application:
**03.08.2005 Bulletin 2005/31**

(73) Proprietor: **ZTE Corporation**
**518057 Shenzhen City,**
**Guangdong Province (CN)**

(72) Inventor: **WANG, Jiaying**
**ZTE Plaza, Keji Road South**
**Shenzhen, Guangdong 518057 (CN)**

(74) Representative: **Awapatent AB**
**Junkersgatan 1**
**582 35 Linköping (SE)**

(56) References cited:
**EP-A- 0 954 125      EP-A- 1 229 382**
**WO-A-01/51970      JP-A- 6 097 552**
**JP-A- 2000 310 727   US-A- 2003 002 145**
**US-B1- 6 417 965**

**Description**

**Field of The Invention**

The present invention relates to optical communications systems, and more particularly, to a method and device for control of optical amplification in optical transmission to provide safety protection.

**Background of The Invention**

Optical amplifiers are used to prolong the transmission distance in a Dense Wavelength Division Multiplexed (DWDM) system. Among them, one method is using a RAMAN amplifier, i.e., feeds the pump light with high power in the optical fiber, and the energy of the pump light will be transferred to the signal light with a longer wavelength to amplify the signal light due to Stimulated RAMAN Scattering (SRS) effect in optical fibers. And another method is using an optical fiber amplifier (e.g. Erbium Doped Fiber Amplifier), i.e., feeds the pump light with a certain power in a special optical fiber, and the energy of the pump light will be transferred to the signal light with a longer wavelength to amplify the signal light due to energy level transition generated by particles' stimulation in optical fibers. The above two types of amplifiers are appropriate for applying in WDM equipments to realize wideband amplification. The applicable amplifiers further include semiconductor optical amplifier, which amplifies the signal light by energy transition caused by immitting abundant current to semiconductor heterochronous nodes. And each of the above amplifiers or lasers can control optical power by changing drive current. In recently used optical communication apparatus, the amplifier outputs invisible laser radiation with high power, for instance, the pump laser radiation pump power output by the RAMAN amplifier from the optical port of the apparatus to the optical fiber cable can be hundreds up to 1000 milliwatts in the case of actualizing distributed amplification of C band signals in G.652 optical fiber cable, and the signal optical power amplified by optical fiber laser can also reach to 100 milliwatts when outputting to the optical fiber cable via the optical port. Because the power of the output light is high, in amplifier operation, the personnel adjusting the apparatus should carefully keep away from the surface of the connector to avoid heat injury of eyes and skin when there is no safety control for the apparatus. Before using, the surface of the output tail fiber should be kept clean to prevent surface damages caused by high optical power carbonizing dust adhered to the surface of the optical fiber. Too large reflected optical power caused by disconnected connector used for the optical port of the apparatus, surface damages of the connector, and damages of other related devices of the apparatus might bring damages of the hardware units and affect the capability of the apparatus. Reducing optical power can provide the apparatus or staffs with safety guarantee, which will be returned to normal once the defects of apparatus are eliminated.

A published patent document US6417965 "Optical Amplifier Control System" disclosed a circuit system detecting spectrum of the input and output light of an amplifier and controlling the pump laser of the amplifier according to the detection result. But said system has the defect of being unable to detect the optical port without detecting reflected light, which is easy to result in safety problems. EP0954125A2 discloses a method and apparatus for controlling optical signal power in response to faults in an optical fiber path, and automatic reduction of optical signal power supplied by an upstream network element by a prescribed amount is achieved by capturing and processing reflected optical energy that is generated within the optical fiber path, but this method and apparatus only may process reflected optical energy generated as a result of a downstream fiber cut. EP1229382A1 discloses an optical amplifier using raman amplification, and may reliably judge an input interruption of signal light and can shut down the supply of excitation light in accordance with a judged input interruption of the signal light, but this optical amplifier may not detect safety problems.

**Summary of The Invention**

The invention is defined by the appendant claims. The description is subject to this limitation. All aspects and embodiments which are labelled aspects or embodiments of the invention but not covered by the claims are merely aspects of the present disclosure and do not form part of the invention.

The present invention aims to provide a method and device for control of optical amplification to provide safety protection so as to avoid possible personnel injury when using apparatus with high optical power output as well as function defects of the apparatus caused in the circumstances that the connector used for the optical port of the apparatus is disconnected, surface of the connector is damaged, and other related devices of the apparatus are damaged.

A method for control of optical amplification to provide safety protection, the method comprising: detecting output power and reflected power of an optical amplifier, and calculating a reflection coefficient and reflected power (2); determining if the reflection coefficient and the reflected power exceed a given threshold (3), if yes, controlling the optical amplifier and adjusting the output power of the optical amplifier under a safe value and keeping on power detection (4); if no, determining if an optical power adjustment is necessary according to the output power, and adjusting the output power into a configured value when necessary (5), or else keeping on power detection, wherein the step of determining whether an optical power adjustment is necessary according to the output power comprises: comparing whether an error between current output power and the configured value of the output power is within an allowance, if it is within an allowance, showing that the current output power is normal and not performing the optical power adjustment, or else carrying out the optical power adjustment.

A device for control of optical amplification to provide safety protection, the device comprising: an optical component assembly (G1, G2) of high light output, for generating pump light with high power; an isolator (I), for ensuring one way transmission of the optical power, and limiting counter transmission of the optical power; an output optical interface (Co), for outputting power of the pump light to outer optical fibers; an optical power collection device, for collecting output optical power detection amount and reflected optical power detection amount; and a processing and control circuit for detected information (E), performing information conversion for gained output optical power detection amount and reflected optical power detection amount, calculating out the reflection coefficient and reflected power, determining whether the reflection coefficient or the reflected power exceeds a given threshold, if it exceeds, controlling an optical amplifier and adjusting the output power of the optical amplifier to a value below a safe value and keeping on power detection; or else, determining whether an optical power adjustment is necessary according to the output power, and adjusting the output power into a configured value when necessary, or else keeping on power detection, wherein the step of determining whether an optical power adjustment is necessary according to the output power comprises: comparing whether an error between current output power and the configured value of the output power is within an allowance, if it is within an allowance, showing that the current output power is normal and not performing the optical power adjustment, or else carrying out the optical power adjustment.

The processing and control circuit for detected information (E) further comprises: a photoelectric conversion device (PD1, PD2), for respectively converting the gained output optical power detection amount and the reflected optical power detection amount to corresponding analog detection signals; an analog-digital conversion circuit of optical power (C1), respectively converting the analog detection signals transmitted from the photoelectric conversion device to corresponding digital signals; a control unit (CS), calculating the reflection coefficient in accordance with the digital signals transmitted from the analog-digital conversion circuit (C1), automatically giving instructions for power control in accordance with gained reflection coefficient, and performing power control for optical component assembly and giving instructions for capability detection; a power control and performance collection circuit of optical component assembly (C2), receiving power controlling instructions given by the control unit, and after analog-digital conversion, automatically controlling power of optical parts, receiving capability detection instructions given by the control unit, detecting capability of the optical parts, and inputting gained information being analog-digital converted to the control unit.

Comparing with the prior arts, utilizing the device of the present invention makes progress of providing a safety protection method for apparatus with high light output, and more particularly for amplifiers in the optical communication apparatus, actualizes the effect of automatically controlling power of the amplifier (or other apparatus with high light output) by detecting the output reflection coefficient, so as to provide the apparatus or staffs with more safety protection.

**Brief Description of The Drawings**

Fig.1 is a structural diagram of the device detecting reflected light and automatically controlling optical power of a RAMAN amplifier;
Fig.2 is a structural diagram of the device detecting reflected light and automatically controlling optical power of a discrete amplifier;
Fig.3 is a structural block diagram of the processing and control circuit for detected information;
Fig.4 is a schematic diagram of the reflection coefficient detection range;
Fig.5 is a flow chart of the software operating in the control unit.

**Detailed Description of The Preferred Embodiments:**

Hereinafter describes the preferred embodiments of each component part of the present invention, comprising optical and electrical connection relationship, controlling method, software working method and communication functions actualized via the apparatus bus by the device of the present invention.

(1) Hardware Components

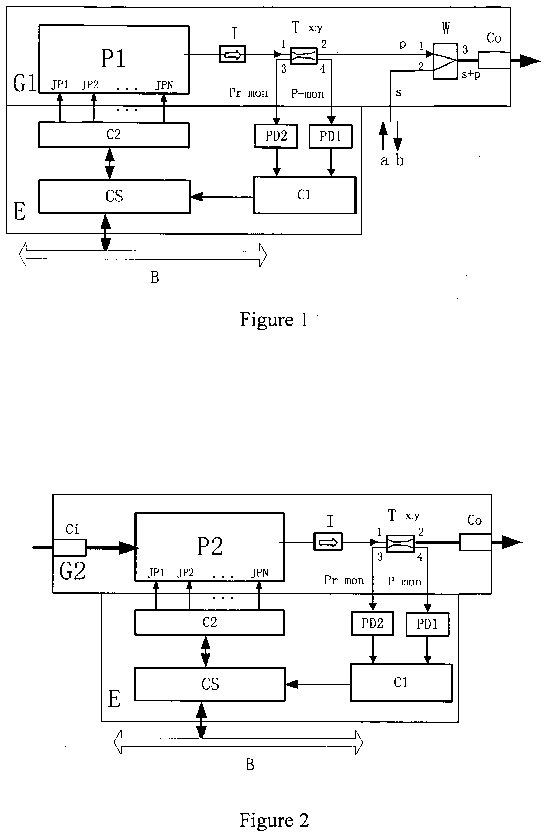

Fig. 1 gives an embodiment actualizing safety control of a RAMAN amplifier by detecting reflection coefficient. Wherein G1 is an optical component assembly generating pump laser and outputting high optical power, and in G1:

P1 is a general purpose pump laser group, which is composed of one or more lasers, and all N lasers connect with control circuit C2 via electrical interfaces JP1, JP2, ..., JPN. P1 can output the laser radiation satisfying working requirement of the apparatus during normal working.

I is an isolator, ensuring one way transmission of the optical power, and the optical power opposite to the arrow direction of the isolator will be isolated. The counter isolation of I is i[dB].

T is a ratio coupler with 4 optical ports, and the spectrum ratio is X:Y, i.e., when input optical power p1[mw] from port 1, there will be $p1 \times xy/(x+y)$[mw] outputting to port 2 and $p1 \times x/(x+y)$[mw] outputting to port 4; on the contrary, if input optical power p2[mw] from port 2, there will be $p2 \times y/(x+y)$[mw] outputting to port 1 and $p2 \times x/(x+y)$[mw] outputting to port 3. When the pump optical power inputs from port 1 and outputs from port 2 and port 4 pro rata, reflected light generated by the down stream parts of the port 2 will be input from port 2 along the optical conductor and output from port 2 and port 3 pro rata. In order to reduce coupler's effect to the output optical power, it should be x<<y. The light of port 4 and port 3 respectively serves as detection amount of the output optical power P-mon and detection amount of the reflected optical power Pr-mon.

W is a wavelength multiplexing device, and a pump light passage is formed between port 1 and port 3, and a signal light passage is formed between port 2 and port 3. The pump light is input from port 1 and out from port 3. If the signal light is input from port 2 and output from port 3(i.e. a direction), the amplifier is applied as forward amplifier; if the signal light is input from port 3 and output from port 2(i.e. b direction), the amplifier is applied as reversed amplifier. There is pump light p at port 1, signal light s at port 2, and the mixed pump and signal light (p+s) at port 3. The insertion loss of W is w[dB], and the isolation between port 2 and port 3 is iw[dB].

Co is an output optical interface actualized by a removable optical fiber connector. Power of the pump light is output to the optical fiber connected with G1 by the connector.

E is a processing and control circuit for detected information. In E:

PD1 and PD2 are photoelectric detection diodes, conducting photoelectric conversion to the detection amount of the output optical power P-mon and detection amount of the reflected optical power Pr-mon respectively.

C1 includes twin channel amplification and A/D conversion circuit, the analog detected signals outputting from P1 and P2 are input to C1, appropriately amplified and A/D converted, and gains the detection value of the above-mentioned output power and reflected power by the means of digital signals.

CS is a control unit. The digital signals output from C1 are input to CPU inside CS, and the output reflection coefficient is calculated. Executive software in CS can operate according to the gained reflection coefficient, and automatically control the power complying with the method described in section (4) hereinafter.

C2 is a power control circuit. C2 is manipulated by CS, and connects with P1 via the interface of the pump laser.

B is an apparatus communication bus, and CS can connect with the apparatus communication bus B via the included communication interface thereof, so that the device of the present invention can report the working performance information of the amplifier (or other high light output equipment) to the apparatus management system via the communication bus, and can be controlled by the apparatus management system.

Fig. 2 is a structural diagram of the device actualizing safety control of a discrete amplifier by reflection coefficient detection, acting as another embodiment with the same invention spirit of fig. 1.

Similar with the structure in fig. 1, G2 is an optical component assembly actualizing signal light amplification and outputting high optical power to the apparatus external, and in G2:

P2 is a discrete amplifier, which is composed of one or more optical amplified components. Taking an optical fiber amplifier as an instance, it includes one or more pump lasers. All N lasers connect with control circuit C2 via electrical interfaces JP1, JP2, ..., JPN. P2 can output the laser radiation satisfying working requirement of the apparatus during normal working.

I means the same as in fig. 1.

T means the same as in fig. 1.

Ci is the input optical interface of the device, and the light signal for amplification will be input to P2 via Ci.

Co means the same as in fig. 1.

E and each internal component of E have the same meaning as in fig. 1. Wherein C2 connects with P2 via electrical interfaces JP1, JP2, ..., JPN.

B means the same as in fig. 1.

As another application embodiment showing the same invention spirit of fig. 1, fig. 2 indicates a different input and output method of the optical signals in different application.

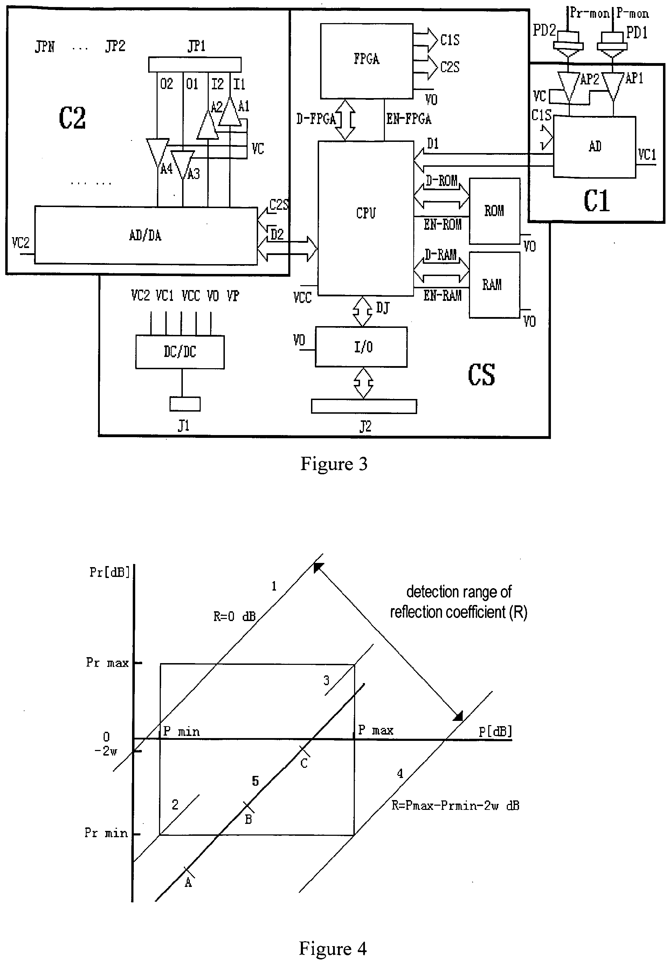

Fig. 3 gives further and detailed description of the structures in fig. 1 and fig. 2.

CS is a control unit composed of a CPU, a ROM, a RAM and a FPGA, wherein the ROM serves as the program and data memory, storing the default configuration data required by the executive software and program operation to operate the device of the present invention, and can include an electrically erasable memory actualizing online downloading the configuration data; the RAM serves as a data memory, recording important data generated in program operation. Each circuit chip connects with the control line EN-FPGA, EN-RAM and EN-ROM by the data line D-ROM, D-RAM and D-FPGA; the CPU is connected to J2 by the data line DJ and the interface circuit I/O. J2 is a signal connector between the device and the apparatus communication bus B. The circuits further includes standard DC/DC conversion circuit, outputting the offset voltage VC1, VC2, VCC,V0 and VP required by each part of the function circuit. The DC/DC conversion circuit connects to J1, and J1 is the power supply connector between the device and the apparatus communication bus B, J1 and J2 co-actualize the electrical connection between the device and the apparatus bus.

C1 is the output and reflected light detection circuit composed of the circuit of amplifier and AD conversion circuit. Respectively amplifies the analog detection signals output from P1 and P2 via AP1 and AP2. And CPU communicates with AD conversion circuit via data line D1. When P-mon should be detected, CPU controls C1S signals of FPGA to select the input port 1 of AD, and the AD conversion circuit output data to CPU via D1 at the same time; when Pr-mon should be detected, CPU controls C1S signals of FPGA to select the input port 2 of AD, and the AD conversion circuit output data to CPU via D1 at the same time.

C2 is a pump laser control and performance collection part composed of AD/DA conversion circuit and amplifier circuit A1, A2, A3 and A4. JP1 indicates the optical interface of the pump laser under control, and the application of the interface of the pump laser complies with the user's application document of commercial laser. Taking JP1 as an example, I1 indicates offset current input of the laser, I2 indicates cooling current input of the laser, 01 indicates detection signal output of backlight power of the laser, and 02 indicates working temperature output of the tube core of the laser. CPU communicates with AD conversion circuit via data line D2. When the output power of pump laser 1 should be controlled, CPU controls C2S signals of FPGA to select the output port of AD/DA, and CPU outputs data to AD/DA conversion circuit via D2 at the same time. After DA conversion, outputs and keeps the analog working current via the port selected by outputting C2S by FPGA, and transfers to I1 of JP1 after amplification. When the tube core temperature of pump laser 1 should be controlled, CPU controls FPGA to select the output port of AD/DA, and CPU outputs data to AD/DA conversion circuit via D2 at the same time. After DA conversion, outputs and keeps the analog working current via the port selected by FPGA, and transfers to I2 of JP1 after amplification. When the output power of pump laser 1 should be detected, CPU controls FPGA to select the input port of AD/DA, and 01 signal output from JP1 is input to AD/DA circuit after appropriate amplification, outputs to CPU via D2 port after AD conversion. When the cooling current of the pump laser should be detected, CPU controls FPGA to select the input port of AD/DA conversion, and 02 signal output from JP1 is input to AD/DA circuit after appropriate amplification, outputs to CPU via D2 port after AD conversion. When controlling the pump laser, it requires detection to corresponding capability for more accurate feedback adjustment.

When there are a few pump lasers requiring detection and control, more detection and control circuits are required, and connect with each laser via the electrical interface JP1, JP2,..., JPN, and select suitable AD/DA converter according to the number of lasers and the parameter amounts requiring detection and control to actualize multiplex detection and control.

(2) reflection coefficient Threshold and reflection coefficient Detection Range

Without loss of generality, the reflection coefficient, insertion loss, etc. of the following text are shown by the positive numbers of their dB values. Supposing that P is the output power (at port 1 of T) of P1, and Pr is the reflected power (at port 2 of T). The relationship of the optical power of each port of the ratio coupler T is:

$$[P , Pr][dB]=[P\text{-mon} , Pr\text{-mon}][dB]+10lg(1+y/x) \qquad (1)$$

When the inherent insertion loss of the ratio coupler T is quite little, formula (1) ignores the inherent loss. The foregoing reflection coefficient can be defined to the surface of connector Co of the device of the present invention. Taking the application shown in fig. 1 as an instance, the relationship between the reflection coefficient and reflection & output detection light of the surface of the connector is:

$$R[dB]=P[dB]-2w[dB]-Pr[dB] \qquad (2)$$

Where R[dB] is the reflection coefficient of the surface of connector Co (R>0), and w is insertion loss of W (w>0).

The optical power of the reflected light entering P1 is:

$$Pri[dB]=P[dB]-2w[dB]-R[dB]-i[dB]-20lg\{y/(x+y)\}[dB]$$

$$\approx P[dB]-2w[dB]-R[dB]-i[dB] \text{ , when } x<<y \qquad (3)$$

Where i is the counter isolation of the isolator I. When the inherent insertion loss of the ratio coupler T is quite little, formula (3) ignores the inherent loss. The reflected light wishing to enter P1 is little enough when the apparatus is in normal working, and supposing that the threshold thereof is Pri-th, the reflection coefficient of power of reflection input Pri reaching to the threshold is:

$$R\text{-}th_1[dB]=P[dB]-2w[dB]-Pri\text{-}th[dB]-i[dB] \qquad (4)$$

Optical power of reflected light output by port 2 of W is

$$Pro[dB]=P[dB]-w[dB]-R[dB]-iw[dB] \qquad (5)$$

Where iw is isolation between port 2 and port 3 of W, and satisfies iw>0. The optical power of the reflected light wishing to enter port 2 of W is little enough when the apparatus is in normal working, and supposing that the threshold thereof is Pro-th, the reflection coefficient of power of reflected output Pro reaching to the threshold is:

$$R\text{-}th_2[dB]=P[dB]-w[dB]-Pro\text{-}th[dB]-iw[dB] \qquad (6)$$

$R\text{-}th_1$ and $R\text{-}th_2$ are parameters varying with changes of output power of the apparatus P.
Moreover, the threshold of reflected power can be directly defined on the surface of connector Co of the output interface, which is shown as Pr-th.
The reflection coefficient of the following circumstances should be considered in apparatus application:

I . Supposing that the reflection coefficient is Rc[dB] when the optical fiber surface of the connector is well matched, which is parameter fixed by the selected size of the connector used in the apparatus;
II . Supposing that the reflection coefficient of the optical fiber surface of the connector exposed in air is R1[dB], which is parameter fixed by the selected size of the connector used in the apparatus; and R1[dB]<Rc[dB].
III. Supposing that the reflection coefficient is R2[dB] when there is space between the ends of optical fiber of the connector although the outer optical fiber is well connected, and R2[dB]<Rc[dB];
IV. Supposing that the reflection coefficient is R3[dB] when the reflected light becomes larger due to dust pollution of the optical fiber surface of the connector, bigger flange assorted tolerance of the connector, damages of parts of the connector, or the injuries of the outer cable of the apparatus, and R3[dB]<Rc[dB].

Therefore, to ensure the normal internal and external connection of the apparatus, the reflection coefficient R-$th_3$ should satisfy:

$$Rc[dB]>R\text{-}th3[dB]>max\{R1[dB],R2[dB],R3[dB]\} \qquad (7)$$

Considering the foregoing capabilities, the alarming condition can be:

Condition 1: When the reflected power Pri>Pri-th, it means that the optical power entering power input device is too large;
Condition 2: When the reflected power Pro>Pro-th, it means that the reflected optical power outputting from the signal optical port is too large;
Condition 3: When the reflected power Pr>Pr-th, it means that the reflected optical power generated by the output port connector is too large;
Condition 4: When the reflection coefficient R<R-$th_1$, gives refection input power alarm;
Condition 5: When the reflection coefficient R<R-$th_2$, gives refection output power alarm;
Condition 6: When the reflection coefficient R<R-th3, gives alarm of optical interface defect of the device, indicating that there might be the foregoing circumstances of II, III and IV.

Partial or all the conditions1-6 above can be adopted by the present invention as the basis to carry out safety control.

Taking the above aspects into account, when the apparatus is in normal working, it should satisfy:

$$R > MAX[R\text{-}th_1 , R\text{-}th_2 , R\text{-}th_3] \qquad (8)$$

Fig. 4 shows the reflection coefficient detection range, which is determined by the detection range of the output and input light. In the figure, abscissa P[dB] is the output power of P1 (at port 1 of T), and ordinate Pr[dB] is the reflected power (at port 2 of T). Pmax is the upper limit of the detection range of the output power, and Pmin is the lower limit of the detection range of the output power; Prmax is the upper limit of the detection range of the reflected power, and Pmin is the lower limit of the detection range of the reflected power.

In the figure, range within Pmin~Pmax and Prmin~Prmax is the working range of the detection circuit; wherein the straight lines intersecting in the range,
Straight line 1 shows Pr varying with P when R=0; the upper part of straight line 1 is an area without operation significance;
Straight line 2 shows Pr varying with P when R=Pmin-Prmin-2W;
Straight line 3 shows Pr varying with P when R=Pmax-Prmax-2W;
Straight line 4 shows Pr varying with P when R=Pmax-Prmin-2W.

The reflection coefficient detection range is Rmin~Rmax, and is limited by the detection range of the output and input optical power. And:

$$Rmin=0 ; Rmax=Pmax\text{-}Prmin\text{-}2w \qquad (9)$$

Straight line 5 in fig 4 shows Pr varying with P when the apparatus is under a condition with a special output reflection coefficient. On straight line 5, A, B and C indicate several typical working states.

A: Out of the detection range of P and Pr, the reflection coefficient cannot be detected;
B: Within the detection range of P and Pr, the reflection coefficient can be detected. Here P is in the safe output power. Under this circumstance, Pri and Pro of P which is adjusted beyond the safe output power (such as location C) can be doped by using the detected reflection coefficient. If the detected reflection coefficient reaches the reflection coefficient threshold when P is risen up to location B by instructions given by apparatus external, further power rising will be prohibited; If Pri and Pro of P which is adjusted beyond the safe output power are doped up to or over the thresholds Pri-th and Pro-th, further power rising will also be prohibited;
C: Within the detection range of P and Pr, the reflection coefficient can be detected. Here P is beyond the safe output power. When the apparatus operates under this circumstance, if sudden defects result in the detected reflection coefficient reaching the thresholds $R\text{-}th_1$, $R\text{-}th_2$, $R\text{-}th_3$, safety control is automatically started and the output power will be adjusted under the safe line of the power (such as location B).

When the contents hereinabove is used in the embodiment of fig. 2, there is not the reflection output power Pro, and w=0[dB] in each formula above.

The software operating in CPU can store the current detection data into RAM as the capability list, which includes the current reflection coefficient R, refection input power Pri, reflection output power Pro, laser output power P of the device, etc.

The software operating in CPU can store the configuration data of the device instructed by data bus B into the memory as the configuration list, which includes the current configured reflection coefficient threshold $R\text{-}th_3$, refection input power threshold Pri-th, reflection output power threshold Pro-th, laser output power Pc of the device, etc.

The software operating in CPU can store the alarming information produced by the device into the memory as the alarm list, which includes a current generated alarm of refection input power $R < R\text{-}th_1$, an alarm of reflection output power $R < R\text{-}th_2$, an alarm of optical interface defect of the device $R < R\text{-}th_3$, etc.

(3) Apparatus Communication

As a component of the practical apparatus, the device can communicate with the apparatus management system. In this section, types of the apparatus communication relating to the function of the device will be described in details.

The apparatus management system can implement the following inquiries of the device via the apparatus bus B:

Inquiry about capability information (corresponding to message 1)
Inquiry about configuration information (corresponding to message 2)
Inquiry about alarm information (corresponding to message 3)

The device will also output the following messages to the apparatus bus B via I/O interface:

Report capability information (corresponding to message 4)
Report configuration information (corresponding to message 5)
Report alarm information (corresponding to message 6)

The apparatus management system can implement the following control to the device via the apparatus bus B:

Renew configuration data (corresponding to message 7)

Hereinafter describes the embodiments of message 1-7 above respectively:

Message 1: [H, ADD, C1, L, F]

Wherein H means heading of the message, which is a pulse train with fixed format to actualize communication synchronization; ADD is the address of the device in the apparatus; C1 is the code of communication protocol, here means inquiring capability of the device; L means the length of the message; F indicates the type of capability value inquired to the device, including the current reflection coefficient R, refection input power Pri, reflection output power Pro, laser output power P of the device, etc.

Message 2: [H, ADD, C2, L, C]

Wherein H means heading of the message, which is a pulse train with fixed format to actualize communication synchronization; ADD is the address of the device in the apparatus; C2 is the code of communication protocol, here means inquiring the configuration information of the device; L means the length of the message; C indicates the type of configuration data inquired to the device, including the current configured reflection coefficient threshold R-th$_3$, refection input power threshold Pri-th, reflection output power threshold Pro-th, laser output power Pc of the device, etc.

Message 3: [H, ADD, C3, L]

Wherein H means heading of the message, which is a pulse train with fixed format to actualize communication synchronization; ADD is the address of the device in the apparatus; C3 is the code of communication protocol, here means inquiring the alarm information of the device; L means the length of the message.

In order to respond to the inquiry of message 1, the device will output the messages in following format to the apparatus bus B via I/O interface:

Message 4: [H, ADD, C4, L, F, V1, V2, ..., Vn]

Wherein H means heading of the message, which is a pulse train with fixed format to actualize communication synchronization; ADD is the address of the device in the apparatus; C4 is the protocol code, here means reporting the capability value of the device; L means the length of the message; F indicates the type of capability value inquired to the device, including the current reflection coefficient R, refection input power Pri, reflection output power Pro, laser output power P of the device, etc.; V1, V2,..., Vn indicate n capability values reported.

In order to respond to the inquiry of message 2, the device will output the messages in following format to the apparatus bus B via I/O interface:

Message 5: [H, ADD, C5, L, C, V1, V2, ..., Vn]

Wherein H means heading of the message, which is a pulse train with fixed format to actualize communication synchronization; ADD is the address of the device in the apparatus; C5 is the protocol code, here means reporting the configuration information of the device; L means the length of the message; C indicates the type of configuration data inquired to the device, including the current configured reflection coefficient threshold R-th$_3$, refection input power threshold Pri-th, reflection output power threshold Pro-th, laser output power Pc of the device, etc.; V1, V2,..., Vn indicate n configuration information values reported.

In order to respond to the inquiry of message 3, the device will output the messages in following format to the apparatus bus B via I/O interface:

Message 6: [H, ADD, C6, L,A1, A2, ..., An]

Wherein H means heading of the message, which is a pulse train with fixed format to actualize communication synchronization; ADD is the address of the device in the apparatus; C6 is the protocol code, here means reporting the alarm information of the device; L means the length of the message; A1, A2,..., An indicate n alarm information values reported. Including current generated refection input power alarm R<R- th$_1$, refection output power alarm R<R-th$_2$, and alarm of optical interface defect of the device R<R- th$_3$, etc.

The apparatus management system sends the message to the device in the following format via the apparatus bus B when renewing the configuration data of the device:

Message 7: [H, ADD, C7, L, C, V1, V2, ..., Vn]

Wherein H means heading of the message, which is a pulse train with fixed format to actualize communication synchronization; ADD is the address of the device in the apparatus; C7 is the protocol code, here means renewing the configuration information of the device; L means the length of the message; C indicates the type of configuration data requiring renewal, including the current configured reflection coefficient threshold R-th$_1$, R-th$_2$ and R-th$_3$, refection input power threshold Pri-th, reflection output power threshold Pro-th, laser output power P of the device, etc.; V1, V2,..., Vn indicate n configuration information values reported.

(4) Software Flow Actualizing Automatic Safety Control

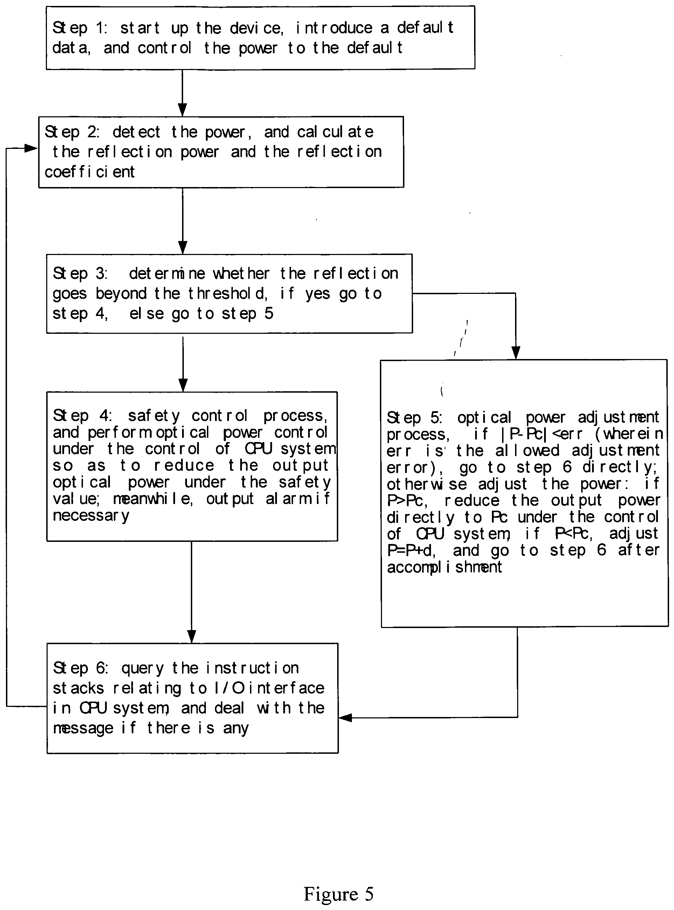

The software flow actualizing automatic safety control of the optical power in the device is shown in fig. 5. Detailed description is given hereinafter.

Step 1: When the device is power on /reset, CPU system starts up, and loads executable program from the memory. Valid default values such as Pc, Pri-th, Pro-th, R-th$_3$, etc. are started up by the program, and the power is adjusted to a default.

Step 2: CPU system controls C1 to carry out detection, and Pr-mon and P-mon are gained after capability detection. Then respectively calculate capability value Pr, P, R, Pri, Pro, R-th$_1$ and R-th$_2$ according to formula 1~6. Store the consequences after calculation into the capability list of the memory.

Step 3: Determine whether the reflection coefficient or the reflected power satisfy the safety requirement according to one or more conditions of condition 1~6. If the reflection coefficient or the reflected power is beyond the threshold, enter into step 4, i.e., safety control process; or else enter into step 5, i.e., optical power adjustment process.

Step 4: Enter into the safety control process. Comprising: (1) give and report alarms, and in the embodiment of fig. 1, alarms can be respectively given in accordance with the following states: if R< R-th$_1$, an alarm of the reflection input power going beyond the limit is given; if R< R-th$_2$, an alarm of the reflection output power going beyond the limit is given; if R< R-th$_3$, an alarm of optical interface defect of the device is given. [Message 6] can be initiatively reported via the apparatus communication bus, and the alarm list can be modified when there are differences between the newly given alarm and the former alarm list in the memory. (2) CPU system controls C2 to perform optical power control, so as to reduce the output optical power under the safe value.

Step 5: Because the determined consequence at step 3 is the normal reflection coefficient, implement the optical power adjustment process. In the process of adjusting the optical power, at first compare the capability value of the current output optical power P with the configured value Pc, and if |P-Pc|<err (where err is the allowed adjustment error), the current power value is normal and directly enter to step 6; otherwise adjust the power: if P>Pc, CPU system controls C2 to perform optical power control to directly reduce the output power to Pc; if P<Pc, adjust the current output optical power and make the optical power increased in grades. Please note that one adjustment can be made according to step length d to avoid equipment and personnel injury caused by possible equipment defects when Pc runs beyond the safe value. Enter into step 6 after accomplishment and the control can be called as power graded control. Another adjustment can be made again according to step length d when entering into the next circle, and the optical power will approach to Pc in steps when there is no defect of the equipment. When the reflected power or the reflection coefficient is normal, the current alarm list can be deleted from the memory to avoid giving an alarm.

Step 6: query the instruction stacks relating to I/O interface in CPU system, and no message is received when the inquiry result is null. Then enter into step 2 to implement recycling capability detection. If there is received message, deal with the message, and CPU performs apparatus communication via I/O interface. For example: if there is capability inquiry instruction (message 1) in the instruction stack, submit report (message 4) according to the capability list; if there is configuration inquiry instruction (message 2) in the instruction stack, submit report (message 5) according to the configuration list; if there is alarm inquiry instruction (message 3) in the instruction stack, submit report (message 6) according to the alarm list; if there is inquiry instruction of configuration data renewal (message 7) in the instruction stack, modify the configuration list in the memory. Then enter into step 2 after the accomplishment, and carry on recycling capability detection.

It should be noted that the above embodiments are used only to explain but not to limit the present invention. In despite of the detailed description of the present invention with referring to above preferred embodiments, it should be understood that various modifications, changes or equivalents can be made by those skilled in the art without departing from the spirit and scope of the present invention. All of the modifications, changes or equivalents should be covered in the scope of accompanying claims of the application.

**Claims**

1.   A method for safety control of optical amplification, **characterized by**, comprising:

   detecting output power **P** and reflected power **Pr** of an optical amplifier by [P, Pr][dB]=[P-mon, Pr-mon][dB]+10lg(1+y/x), wherein, the output power **P** is output from a power output device (P1, P2) and at a port 1 of a ratio coupler (T), the reflected power **Pr** is a portion of power reflected on a surface of an output optical interface (Co) and at a port 2 of the ratio coupler (T), **P-mon** is detection amount of the output power **P** and at a port 4 of the ratio coupler (T), **Pr-mon** is detection amount of the reflected power **Pr** at a port 3 of the ratio coupler (T), and a spectrum ratio of the ratio coupler (T) is x:y;
   calculating a reflection coefficient **R** based on the output power **P** and the reflected power **Pr;**
   determining whether the reflection coefficient **R** or the reflected power **Pr** exceeds a given threshold;
   if it exceeds, giving and reporting alarm information, and adjusting the output power **P** of the optical amplifier to a value below a safety value, and continuing power detection, wherein the safety value is a value to avoid equipment and personnel injury caused by equipment defects;
   if it does not exceed, determining whether an optical power adjustment is necessary according to the output power **P,** and adjusting the output power into a configuration value of the output power when necessary, or keeping on power detection,
   wherein, the optical amplifier comprises an optical component assembly (G1, G2) including a power output device (P1, P2), an isolator (I), the ratio coupler (T), and the output optical interface (Co);
   wherein, the alarm information comprises at least one of:

      a reflected input power **Pri** entering into the power output device (P1) being too large if the reflected input power **Pri** is larger than a threshold **Pri-th** of the reflected input power **Pri,** wherein the reflected input power **Pri** is a portion of the reflected power **Pr** entering the power output device (P1, P2) and is output from the port 1 of the ratio coupler (T), and the threshold **Pri-th** is preset for the optical amplifier working normally; the reflected power **Pr** reflected and output by the output optical interface (Co) being too large if the reflected power Pr is larger than a threshold **Pr-th** of the reflected power **Pr,** wherein the threshold Pr-th is defined on the surface of the output optical interface (Co);
      giving an alarm of the reflected input power **Pri** going beyond a limit if the reflection coefficient **R** is less than a first reflection coefficient threshold $R\text{-th}_1$ of the reflection coefficient reflecting the reflected input power **Pri,** wherein the first reflection coefficient threshold $R\text{-th}_1$ is calculated based on the output power **P** and the threshold **Pri-th** of the reflected input power **Pri.**

2.   The method for safety control of optical amplification according to claim 1, wherein the step of determining whether an optical power adjustment is necessary according to the output power comprising:

   comparing whether an error between current output power and the configuration value of the output power is within an allowance, if it is within an allowance, showing that the current output power is normal and not performing the optical power adjustment, or else carrying out the optical power adjustment.

3.   The method for safety control of optical amplification according to claim 2, wherein the optical power adjustment further comprises: determining whether the output power is larger than the configuration value of the output power, if it is larger than the configuration value of the output power, controlling the output power to be directly lowered to the configuration value of the output power in one adjustment, or increasing the output power by a step length if it is less than the configuration value of the output power.

4. The method for safety control of optical amplification according to claim 3, wherein an adjustment method of step length is adopted in increasing the output power by the step length in the process of adjusting the optical power, and the output power is increased by only one step length each time and detection is performed simultaneously; the output power is increased to the configuration value of the output power in steps only if no alarm is given during the process of adjusting the optical power.

5. The method for safety control of optical amplification according to claim 1, wherein the optical component assembly (G1) further comprises a wave combination device (W) between the ratio coupler (T) and the output optical interface (Co), and a pump light is formed between a port 1 of the wave combination device (W) and a port 3 of the wave combination device (W) and a signal light is formed between a port 2 of the wave combination device (W) and the port 3 of the wave combination device (W); and

wherein, the alarm information further comprises at least one of:

a reflected output power **Pro** output from the port 2 of the wave combination device (W) being too large if the reflected output power **Pro** is larger than a threshold **Pro-th** of the reflected output power **Pro,** wherein the reflected output power **Pro** is a portion of optical power reflected by the surface of an output optical interface (Co), and the threshold **Pro-th** is preset for the optical amplifier working normally;

giving an alarm of the reflected output power **Pro** going beyond a limit if the reflection coefficient **R** is less than a second reflection coefficient threshold $\text{R-th}_2$ of the reflection coefficient reflecting the reflected output power **Pro,** wherein the second reflection coefficient threshold $\text{R-th}_2$ is calculated based on the output power **P** and the threshold **Pro-th** of the reflected output power **Pro.**

6. The method for safety control of optical amplification according to claim 1, further comprising: predefining a third reflection coefficient threshold $\text{R-th}_3,$ wherein Rc[dB]>$\text{R-th}_3$[dB]>max{R1[dB], R2[dB], R3[dB]}, Rc is a reflection coefficient when the surface of the output optical interface (Co) is well matched, R1 is a reflection coefficient of the surface of the output optical interface (Co) exposed in air, R2 is a reflection coefficient when there is space between ends of optical fiber of the output optical interface (Co) although outer optical fiber is well connected, and R3 is a reflection coefficient when reflection light becomes larger due to dust pollution of the surface of the output optical interface (Co), bigger flange assorted tolerance of the output optical interface (Co), damages of parts of the output optical interface (Co), or injuries of an outer cable of the optical amplifier;

giving an alarm of a defect of the output optical interface (Co) if the reflection coefficient **R** is less than the third reflection coefficient threshold $\text{R-th}_3$ of the reflection coefficient reflecting a working status of the output optical interface (Co).

7. A device for safety control of optical amplification, comprising:

an optical component assembly (G1, G2), which includes:

a power output device (P1, P2), for generating pump light with high output power;
an isolator (I), for ensuring one way transmission of output power and limiting counter transmission of reflected power;
a ratio coupler (T), for collecting detection amount **P-mon** of an output power **P** and detection amount **Pr-mon** of a reflected power **Pr,** wherein, the output power **P** is output from a power output device (P1, P2) and at a port 1 of the ratio coupler (T), the reflected power **Pr** is a portion of power reflected on a surface of an output optical interface (Co) and at a port 2 of the ratio coupler (T), the detection amount **P-mon** is at a port 4 of the ratio coupler (T) and the detection amount **Pr-mon** is at a port 3 of the ratio coupler (T); and
the output optical interface (Co), for outputting light power to outer optical fibers; and

a processing and controlling circuit of detected information (E), for

performing information conversion for the detection amount **P-mon** of the output power **P** and the detection amount **P-mon** of the reflected power **Pr,**
detecting the output power **P** and the reflected power **Pr** of an amplifier according to the detection amount **P-mon** and the detection amount **P-mon,**
calculating a reflection coefficient **R** based on the output power **P** and the reflected power **Pr,**

determining whether the reflection coefficient **R** or the reflected power **Pr** exceeds a given threshold, if it exceeds, giving and reporting alarm information, and adjusting the output power **P** of the amplifier to a value below a safe value, and continuing power detection, wherein the safe value is a value to avoid equipment and personnel injury caused by equipment defects when the configured value runs beyond the safe value,
if it does not exceed, determining whether an optical power adjustment is necessary according to the output power **P,** if necessary, adjusting the output power into a configured value of the output power when necessary, and if not, keeping on power detection;

wherein, the alarm information comprises at least one of:

a reflected input power **Pri** entering into the power output device (P1) being too large if the reflected input power **Pri** is larger than a threshold **Pri-th** of the reflected input power **Pri,** wherein the reflected input power **Pri** is a part of the reflected power **Pr** and output from the port 1 of the ratio coupler (T), and the threshold **Pri-th** is for a minimum reflected light wishing to enter the power output device (P1);
the reflected power **Pr** reflected and output by the output optical interface (Co) being too large if the reflected power Pr is larger than a threshold **Pr-th** of the reflected power **Pr,** wherein the threshold Pr-th is defined for the surface of the output optical interface (Co);
giving an alarm of the reflected input power **Pri** going beyond a limit if the reflection coefficient **R** is less than a first reflection coefficient threshold $R\text{-}th_1$ of the reflection coefficient reflecting the reflected input power **Pri,** wherein the first reflection coefficient threshold $R\text{-}th_1$ is calculated based on the output power **P** and the threshold **Pri-th** of the reflected input power **Pri.**

8. The device for safety control of optical amplification according to claim 7, wherein the processing and controlling circuit of detected information (E) for determining whether an optical power adjustment is necessary according to the output power in the following way:

comparing whether an error between current output power and the configured value of the output power is within an allowance, if it is within an allowance, showing that the current output power is normal and not performing the optical power adjustment, or else carrying out the optical power adjustment.

9. The device for safety control of optical amplification according to claim 7, wherein the power output device (P1, P2) is an amplifier for controlling the output power by changing a drive current.

10. The device for safety control of optical amplification according to claim 9, wherein the amplifier for controlling the output power by changing the drive current is a discrete amplifier which is composed of one or more optical fiber amplifiers or semiconductor amplifiers; and
wherein the device for safety control of optical amplification further comprises an input optical interface for inputting light signals, and for outputting the input light signals to the discrete amplifier.

11. The device for safety control of optical amplification according to claim 9, wherein the amplifier for controlling the output power by changing the drive current is a distributed RAMAN amplifier which is a pump laser group formed by one or more laser sources.

12. The device for safety control of optical amplification according to claim 11, wherein the optical component assembly (G1) further comprises a wave combination device (W) between the ratio coupler (T) and the output optical interface (Co) and for combining pump light and signal light, wherein, the pump light is formed between a port 1 of the wave combination device (W) and a port 3 of the wave combination device (W), and the signal light is formed between a port 2 of the wave combination device (W) and the port 3 of the wave combination device (W); and
wherein, the alarm information further comprises at least one of:

a reflected output power **Pro** output from the port 2 of the wave combination device (W) being too large if the reflected output power Pro is larger than a threshold Pro-th of the reflected output power **Pro,** wherein the reflected output power **Pro** is a portion of optical power reflected by the surface of an output optical interface (Co) and output by the port 2 of the wave combination device (W), and the threshold **Pro-th** is for a minimum reflected light wishing to output from the port 2 of the wave combination device (W);
giving an alarm of the reflected output power **Pro** going beyond a limit if the reflection coefficient **R** is less than a second reflection coefficient threshold $R\text{-}th_2$ of the reflection coefficient reflecting the reflected output power **Pro,** wherein the second reflection coefficient threshold **R-th$_2$** is calculated based on the output power **P** and the threshold **Pro-th** of the reflected output power **Pro.**

13. The device for safety control of optical amplification according to claim 7, wherein the processing and controlling circuit of detected information (E) comprises:

a photoelectric conversion device (PD1, PD2), for respectively converting the detection amount **P-mon** of the output power **P** and the detection amount **P-mon** of the reflected power **Pr** to corresponding analog detection signals;

an analog-digital conversion circuit (C1), for respectively converting the analog detection signals transmitted from the photoelectric conversion device (PD1, PD2) to corresponding digital signals;

a control unit (CS), for detecting the output power **P** and the reflected power **Pr** of the amplifier in accordance with the digital signals transmitted from the analog-digital conversion circuit (C1), calculating the reflection coefficient **R,** automatically giving instructions for power control in accordance with the reflection coefficient, and performing power control for optical component assembly and giving instructions for capability detection;

a power control and performance collection circuit of optical component assembly (C2), for receiving power controlling instructions given by the control unit (CS), and after analog-digital conversion, automatically controlling power of optical parts, receiving capability detection instructions given by the control unit (CS), detecting capability of the optical parts, and inputting the information gained by analog-digital conversion to the control unit (CS).

14. The device for safety control of optical amplification according to claim 13, wherein the control unit (CS) has a communication interface connecting the control unit with an apparatus communication bus, reports information about working status of the optical amplification device to apparatus management system and receives control instructions of the apparatus management system.

15. The device for safety control of optical amplification according to claim 13, wherein the power control and performance collection circuit of optical component assembly (C2) has electrical interfaces connecting the power control and performance collection circuit of optical component assembly with each optical device, for actualizing power control and performance collection.

**Patentansprüche**

1. Verfahren zur Sicherheitssteuerung einer optischen Verstärkung, **dadurch gekennzeichnet, dass** es Folgendes umfasst:

Detektieren einer Ausgangsleistung P und einer reflektierten Leistung Pr eines optischen Verstärkers durch [P, Pr][dB] = [P-mon, Pr-mon][dB]+10lg(1+y/x), wobei die Ausgangsleistung P von einer Leistungsabgabevorrichtung (P1, P2) und an einem Port 1 eines Verhältniskopplers (T) ausgegeben wird, wobei die reflektierte Leistung Pr ein Teil von Leistung ist, die an einer Oberfläche einer optischen Ausgabeschnittstelle (Co) und an einem Port 2 des Verhältniskopplers (T) reflektiert wird, wobei P-mon ein Detektionsbetrag der Ausgangsleistung P und an einem Port 4 des Verhältniskopplers (T) ist, wobei Pr-mon ein Detektionsbetrag der reflektierten Leistung Pr an einem Port 3 des Verhältniskopplers (T) ist, und wobei ein Spektrumsverhältnis des Verhältniskopplers (T) x:y ist;

Berechnen eines Reflexionskoeffizienten R auf der Basis der Ausgangsleistung P und der reflektierten Leistung Pr;

Bestimmen, ob der Reflexionskoeffizient R oder die reflektierte Leistung Pr eine gegebene Schwelle übersteigt;

im Fall eines Übersteigens, Geben und Melden von Alarminformationen und Justieren der Ausgangsleistung P des optischen Verstärkers auf eines Wert unterhalb eines Sicherheitswertes und Fortsetzen der Leistungsdetektion, wobei der Sicherheitswert ein Wert ist, der vermeidet, dass Ausrüstung und Personen durch Ausrüstungsdefekte zu Schaden kommen;

im Fall des Nicht-Übersteigens, Bestimmen, ob eine Justierung der optischen Leistung gemäß der Ausgangsleistung P erforderlich ist, und Justieren der Ausgangsleistung zu einem Konfigurationswert der Ausgangsleistung, falls erforderlich, oder Fortsetzen der Leistungsdetektion,

wobei der optische Verstärker eine optische Komponentenbaugruppe (G1, G2) umfasst, die eine Leistungsabgabevorrichtung (P1, P2), einen Isolator (I), den Verhältniskoppler (T) und die optische Ausgabeschnittstelle (Co) enthält;

wobei die Alarminformationen mindestens eines von Folgendem umfassen:

dass eine reflektierte Eingangsleistung Pri, die in die Leistungsabgabevorrichtung (P1) eintritt, zu groß ist, wenn die reflektierte Eingangsleistung Pri größer ist als eine Schwelle Pri-th der reflektierten Eingangsleistung Pri, wobei die reflektierte Eingangsleistung Pri ein Teil der reflektierten Leistung Pr ist, die in die Leistungsabgabevorrichtung (P1, P2) eintritt und aus dem Port 1 des Verhältniskopplers (T) ausgegeben wird, und die Schwelle Pri-th für den Fall voreingestellt ist, dass der optische Verstärker normal arbeitet;

dass die reflektierte Leistung Pr, die durch die optische Ausgabeschnittstelle (Co) reflektiert und ausgegeben wird, zu groß ist, wenn die reflektierte Leistung Pr größer ist als eine Schwelle Pr-th der reflektierten Leistung Pr, wobei die Schwelle Pr-th auf der Oberfläche der optischen Ausgabeschnittstelle (Co) definiert ist;

dass ein Alarm wird gegeben, wenn die reflektierte Eingangsleistung Pri über eine Grenze hinausschießt, wenn der Reflexionskoeffizient R kleiner ist als eine erste Reflexionskoeffizientenschwelle $R\text{-th}_1$ des Reflexionskoeffizienten, der die reflektierte Eingangsleistung Pri widerspiegelt, wobei die erste Reflexionskoeffizientenschwelle $R\text{-th}_1$ auf der Basis der Ausgangsleistung P und der Schwelle Pri-th der reflektierten Eingangsleistung Pri berechnet wird.

2. Verfahren zur Sicherheitssteuerung einer optischen Verstärkung nach Anspruch 1, wobei der Schritt des Bestimmens, ob eine Justierung der optischen Leistung gemäß der Ausgangsleistung erforderlich ist, Folgendes umfasst:

Vergleichen, ob ein Fehler zwischen der momentanen Ausgangsleistung und dem Konfigurationswert der Ausgangsleistung innerhalb einer zulässigen Toleranz liegt, und wenn er innerhalb einer zulässigen Toleranz liegt, Anzeigen, dass die momentane Ausgangsleistung normal ist, und Nicht-Ausführen der Justierung der optischen Leistung, oder anderenfalls Ausführen der Justierung der optischen Leistung.

3. Verfahren zur Sicherheitssteuerung einer optischen Verstärkung nach Anspruch 2, wobei die Justierung der optischen Leistung des Weiteren Folgendes umfasst: Bestimmen, ob die Ausgangsleistung größer ist als der Konfigurationswert der Ausgangsleistung, und wenn sie größer ist als der Konfigurationswert der Ausgangsleistung, Veranlassen, dass die Ausgangsleistung in einer einzigen Justierung direkt auf den Konfigurationswert der Ausgangsleistung gesenkt wird, oder Erhöhen der Ausgangsleistung um eine Schrittlänge, wenn sie kleiner ist als der Konfigurationswert der Ausgangsleistung.

4. Verfahren zur Sicherheitssteuerung einer optischen Verstärkung nach Anspruch 3, wobei ein Justierungsverfahren der Schrittlänge bei der Erhöhung der Ausgangsleistung um die Schrittlänge im Prozess der Justierung der optischen Leistung verwendet wird, und die Ausgangsleistung jedes Mal nur um eine einzige Schrittlänge erhöht wird, und gleichzeitig die Detektion ausgeführt wird; und die Ausgangsleistung auf den Konfigurationswert der Ausgangsleistung nur in Schritten erhöht wird, wenn während des Prozesses der Justierung der optischen Leistung kein Alarm gegeben wird.

5. Verfahren zur Sicherheitssteuerung einer optischen Verstärkung nach Anspruch 1, wobei die optische Komponentenbaugruppe (G1) des Weiteren einen Wellenkombinationsvorrichtung (W) zwischen dem Verhältniskopplers (T) und der optischen Ausgabeschnittstelle (Co) umfasst, und ein Pumplicht zwischen einem Port 1 der Wellenkombinationsvorrichtung (W) und einem Port 3 der Wellenkombinationsvorrichtung (W) gebildet wird, und ein Signallicht zwischen einem Port 2 der Wellenkombinationsvorrichtung (W) und dem Port 3 der Wellenkombinationsvorrichtung (W) gebildet wird; und wobei die Alarminformationen des Weiteren mindestens eines von Folgendem umfassen:

dass eine reflektierte Ausgangsleistung Pro, die aus dem Port 2 der Wellenkombinationsvorrichtung (W) ausgegeben wird, zu groß ist, wenn die reflektierte Ausgangsleistung Pro größer ist als eine Schwelle Pro-th der reflektierten Ausgangsleistung Pro, wobei die reflektierte Ausgangsleistung Pro ein Teil der optischen Leistung ist, die durch die Oberfläche einer optischen Ausgabeschnittstelle (Co) reflektiert wird, und die Schwelle Pro-th für den Fall voreingestellt ist, dass der optische Verstärker normal arbeitet;

dass ein Alarm gegeben wird, wenn die reflektierte Ausgangsleistung Pro über eine Grenze hinausschießt, wenn der Reflexionskoeffizient R kleiner ist als eine zweite Reflexionskoeffizientenschwelle $R\text{-th}_2$ des Reflexionskoeffizienten, der die reflektierte Ausgangsleistung Pro reflektiert, wobei die zweite Reflexionskoeffizientenschwelle $R\text{-th}_2$ auf der Basis der Ausgangsleistung P und der Schwelle Pro-th der reflektierten Ausgangsleistung Pro berechnet wird.

6. Verfahren zur Sicherheitssteuerung einer optischen Verstärkung nach Anspruch 1, das des Weiteren Folgendes umfasst: vorheriges Festlegen einer dritten Reflexionskoeffizientenschwelle $R\text{-th}_3$, wobei Rc[dB]>R-

$th_3[dB] > max\{R1[dB], R2[dB], R3[dB]\}$, wobei Rc ein Reflexionskoeffizient ist, wenn die Oberfläche der optischen Ausgabeschnittstelle (Co) gut abgestimmt ist, R1 ein Reflexionskoeffizient der Oberfläche der optischen Ausgabeschnittstelle (Co) ist, die Kontakt mit der Luft hat, R2 ein Reflexionskoeffizient ist, wenn es Raum zwischen Enden der optischen Faser der optischen Ausgabeschnittstelle (Co) gibt, obgleich die äußere optische Faser sicher verbunden ist, und R3 ein Reflexionskoeffizient ist, wenn das Reflexionslicht stärker wird aufgrund: einer Staubverunreinigung der Oberfläche der optischen Ausgabeschnittstelle (Co), einer größeren sortierten Flanschtoleranz der optischen Ausgabeschnittstelle (Co), Beschädigung von Teilen der optischen Ausgabeschnittstelle (Co), oder Schäden an einem äußeren Kabel des optischen Verstärkers; und

Geben eines Alarms bezüglich eines Defekts der optischen Ausgabeschnittstelle (Co), wenn der Reflexionskoeffizient R kleiner ist als die dritte Reflexionskoeffizientenschwelle R-th$_3$ des Reflexionskoeffizienten, der einen Arbeitsstatus der optischen Ausgabeschnittstelle (Co) reflektiert.

**7.** Vorrichtung zur Sicherheitssteuerung einer optischen Verstärkung, die Folgendes umfasst:

eine optische Komponentenbaugruppe (G1, G2), die Folgendes enthält:

eine Leistungsabgabevorrichtung (P1, P2) zum Generieren von Pumplicht mit hoher Ausgangsleistung;
einen Isolator (I) zum Sicherstellen einer Einweg-Übertragung von Ausgangsleistung und Einschränken einer Gegenübertragung von reflektierter Leistung;
einen Verhältniskoppler (T) zum Erfassen des Detektionsbetrages P-mon einer Ausgangsleistung P und des Detektionsbetrages Pr-mon einer reflektierten Leistung Pr, wobei die Ausgangsleistung P aus einer Leistungsabgabevorrichtung (P1, P2) und an einem Port 1 des Verhältniskopplers (T) ausgegeben wird, wobei die reflektierte Leistung Pr ein Teil von Leistung ist, die an einer Oberfläche einer optischen Ausgabeschnittstelle (Co) und an einem Port 2 des Verhältniskopplers (T) reflektiert wird, wobei der Detektionsbetrag P-mon an einem Port 4 des Verhältniskopplers (T) anliegt und der Detektionsbetrag Pr-mon an einem Port 3 des Verhältniskopplers (T) anliegt; und
die optische Ausgabeschnittstelle (Co) zum Ausgeben von Lichtleistung an äußere optische Fasern; und
ein Verarbeitungs- und Steuerungskreis detektierter Informationen (E) zum:

Ausführen einer Informationsumwandlung für den Detektionsbetrag P-mon der Ausgangsleistung P und den Detektionsbetrag P-mon der reflektierten Leistung Pr,
Detektieren der Ausgangsleistung P und der reflektierten Leistung Pr eines Verstärkers gemäß dem Detektionsbetrag P-mon und dem Detektionsbetrag P-mon,
Berechnen eines Reflexionskoeffizienten R auf der Basis der Ausgangsleistung P und der reflektierten Leistung Pr,
Bestimmen, ob der Reflexionskoeffizient R oder die reflektierte Leistung Pr eine gegebene Schwelle übersteigt,
im Fall eines Übersteigens, Geben und Melden von Alarminformationen und Justieren der Ausgangsleistung P des Verstärkers auf einen Wert unterhalb eines sicheren Wertes und Fortsetzen der Leistungsdetektion, wobei der sichere Wert ein Wert ist, der vermeidet, dass Ausrüstung und Personen durch Ausrüstungsdefekte zu Schaden kommen, wenn der konfigurierte Wert über den sicheren Wert hinausschießt,
im Fall des Nicht-Übersteigens, Bestimmen, ob eine Justierung der optischen Leistung gemäß der Ausgangsleistung P erforderlich ist, und falls sie erforderlich ist, Justieren der Ausgangsleistung zu einem konfigurierten Wert der Ausgangsleistung, falls erforderlich, und wenn sie nicht erforderlich ist, Fortsetzen der Leistungsdetektion;
wobei die Alarminformationen mindestens eines von Folgendem umfassen:

dass eine reflektierte Eingangsleistung Pri, die in die Leistungsabgabevorrichtung (P1) eintritt, zu groß ist, wenn die reflektierte Eingangsleistung Pri größer ist als eine Schwelle Pri-th der reflektierten Eingangsleistung Pri, wobei die reflektierte Eingangsleistung Pri ein Teil der reflektierten Leistung Pr ist und aus dem Port 1 des Verhältniskopplers (T) ausgegeben wird, und die Schwelle Pri-th für ein reflektiertes Mindestlicht gilt, das in die Leistungsabgabevorrichtung (P1) eintreten will;
dass die reflektierte Leistung Pr, die durch die optische Ausgabeschnittstelle (Co) reflektiert und ausgegeben wird, zu groß ist, wenn die reflektierte Leistung Pr größer ist als eine Schwelle Pr-th der reflektierten Leistung Pr, wobei die Schwelle Pr-th für die Oberfläche der optischen Ausgabeschnittstelle (Co) definiert ist;
dass ein Alarm wird gegeben, wenn die reflektierte Eingangsleistung Pri über eine Grenze hinausschießt, wenn der Reflexionskoeffizient R kleiner ist als eine erste Reflexionskoeffizientenschwelle R-th$_1$ des Reflexionskoeffizienten, der die reflektierte Eingangsleistung Pri widerspiegelt, wobei die erste Reflexionskoeffizientenschwelle R-th$_1$ auf der Basis der Ausgangsleistung P und der Schwelle Pri-th der reflektierten Eingangsleistung Pri berechnet wird.

**8.** Vorrichtung zur Sicherheitssteuerung einer optischen Verstärkung nach Anspruch 7, wobei der Verarbeitungs- und Steuerungskreis von detektierten Informationen (E) zum Bestimmen, ob eine Justierung der optischen Leistung gemäß der Ausgangsleistung erforderlich ist, in der folgenden Weise arbeitet:

Vergleichen, ob ein Fehler zwischen der momentanen Ausgangsleistung und dem konfigurierten Wert der Ausgangsleistung innerhalb einer zulässigen Toleranz liegt, und wenn er innerhalb einer zulässigen Toleranz liegt, Anzeigen, dass die momentane Ausgangsleistung normal ist, und Nicht-Ausführen der Justierung der optischen Leistung, oder anderenfalls Ausführen der Justierung der optischen Leistung.

**9.** Vorrichtung zur Sicherheitssteuerung einer optischen Verstärkung nach Anspruch 7, wobei die Leistungsabgabevorrichtung (P1, P2) ein Verstärker zum Steuern der Ausgangsleistung durch Ändern eines Ansteuerstroms ist.

**10.** Vorrichtung zur Sicherheitssteuerung einer optischen Verstärkung nach Anspruch 9, wobei der Verstärker zum Steuern der Ausgangsleistung durch Ändern des Ansteuerstroms ein diskreter Verstärker ist, der aus einem oder mehreren Optofaserverstärkern oder Halbleiterverstärkern zusammengesetzt ist; und
wobei die Vorrichtung zur Sicherheitssteuerung einer optischen Verstärkung des Weiteren eine optische Eingangsschnittstelle zum Eingeben von Lichtsignalen und zum Ausgeben der eingegebenen Lichtsignale in den diskreten Verstärker umfasst.

**11.** Vorrichtung zur Sicherheitssteuerung einer optischen Verstärkung nach Anspruch 9, wobei der Verstärker zum Steuern der Ausgangsleistung durch Ändern des Ansteuerstroms ein verteilter RAMAN-Verstärker ist, der eine Pumplasergruppe ist, die durch eine oder mehrere Laserquellen gebildet.

**12.** Vorrichtung zur Sicherheitssteuerung einer optischen Verstärkung nach Anspruch 11, wobei die optische Komponentenbaugruppe (G1) des Weiteren eine Wellenkombinationsvorrichtung (W) zwischen dem Verhältniskoppler (T) und der optischen Ausgabeschnittstelle (Co) und zum Kombinieren von Pumplicht und Signallicht umfasst, wobei das Pumplicht zwischen einem Port 1 der Wellenkombinationsvorrichtung (W) und einem Port 3 der Wellenkombinationsvorrichtung (W) gebildet wird und das Signallicht zwischen einem Port 2 der Wellenkombinationsvorrichtung (W) und dem Port 3 der Wellenkombinationsvorrichtung (W) gebildet wird; und
wobei die Alarminformationen des Weiteren mindestens eines von Folgendem umfassen:

dass eine reflektierte Ausgangsleistung Pro, die aus dem Port 2 der Wellenkombinationsvorrichtung (W) ausgegeben wird, zu groß ist, wenn die reflektierte Ausgangsleistung Pro größer ist als eine Schwelle Pro-th der reflektierten Ausgangsleistung Pro, wobei die reflektierte Ausgangsleistung Pro ein Teil der optischen Leistung ist, die durch die Oberfläche einer optischen Ausgabeschnittstelle (Co) reflektiert wird und durch den Port 2 der Wellenkombinationsvorrichtung (W) ausgegeben, und die Schwelle Pro-th für ein reflektiertes Mindestlicht gilt, das aus dem Port 2 der Wellenkombinationsvorrichtung (W) ausgegeben werden will;
dass ein Alarm gegeben wird, wenn die reflektierte Ausgangsleistung Pro über eine Grenze hinausschießt, wenn der Reflexionskoeffizient R kleiner ist als eine zweite Reflexionskoeffizientenschwelle R-th$_2$ des Reflexionskoeffizienten, der die reflektierte Ausgangsleistung Pro reflektiert, wobei die zweite Reflexionskoeffizientenschwelle R-th$_2$ auf der Basis der Ausgangsleistung P und der Schwelle Pro-th der reflektierten Ausgangsleistung Pro berechnet wird.

**13.** Vorrichtung zur Sicherheitssteuerung einer optischen Verstärkung nach Anspruch 7, wobei der Verarbeitungs- und Steuerungskreis von detektierten Informationen (E) Folgendes umfasst:

eine photoelektrische Wandlervorrichtung (PD1, PD2) zum jeweiligen Umwandeln des Detektionsbetrages P-mon der Ausgangsleistung P und des Detektionsbetrages P-mon der reflektierten Leistung Pr in entsprechende analoge Detektionssignale;
einen Analog-Digital-Wandlerkreis (C1) zum jeweiligen Umwandeln der analogen Detektionssignale, die von der photoelektrischen Wandlervorrichtung (PD1, PD2) übertragen werden, in entsprechende digitale Signale;
eine Steuereinheit (CS) zum: Detektieren der Ausgangsleistung P und der reflektierten Leistung Pr des Verstärkers gemäß den digitalen Signalen, die von dem Analog-Digital-Wandlerkreis (C1) übertragen werden, Berechnen des Reflexionskoeffizienten R, automatischen Geben von Instruktionen zur Leistungssteuerung gemäß dem Reflexionskoeffizienten, und Ausführen einer Leistungssteuerung für die optische Komponentenbaugruppe und Geben von Instruktionen zur Fähigkeitendetektion;

einen Leistungssteuerungs- und Leistungserfassungskreis der optischen Komponentenbaugruppe (C2) zum: Empfangen von Leistungssteuerungsinstruktionen, die durch die Steuereinheit (CS) gegeben werden, und - nach der Analog-Digital-Wandlung - automatischen Steuern der Leistung von optischen Teilen, Empfangen von Fähigkeitendetektionsinstruktionen, die durch die Steuereinheit (CS) gegeben werden, Detektieren einer Fähigkeit der optischen Teile, und Eingeben der durch die Analog-Digital-Wandlung erhaltenen Informationen in die Steuereinheit (CS).

**14.** Vorrichtung zur Sicherheitssteuerung einer optischen Verstärkung nach Anspruch 13, wobei die Steuereinheit (CS) eine Kommunikationsschnittstelle hat, welche die Steuereinheit mit einem Vorrichtungskommunikationsbus verbindet, Informationen über einen Arbeitsstatus der optischen Verstärkungsvorrichtung an ein Vorrichtungsmanagementsystem meldet und Steuerungsinstruktionen des Vorrichtungsmanagementsystems empfängt.

**15.** Vorrichtung zur Sicherheitssteuerung einer optischen Verstärkung nach Anspruch 13, wobei der Leistungssteuerungs- und Leistungserfassungskreis der optischen Komponentenbaugruppe (C2) elektrische Schnittstellen hat, die den Leistungssteuerungs- und Leistungserfassungskreis der optischen Komponentenbaugruppe mit jeder optischen Vorrichtung verbinden, um die Leistungssteuerung und Leistungserfassung zu realisieren.

### Revendications

**1.** Procédé de contrôle de sécurité d'amplification optique, **caractérisé en ce qu'**il comprend :

la détection d'une puissance de sortie P et d'une puissance réfléchie Pr d'un amplificateur optique par [P, Pr][dB]=[P-mon, Pr-mon][dB]+10lg(1+y/x), dans lequel la puissance de sortie P est délivrée depuis un dispositif de sortie de puissance (P1, P2) et à un port 1 d'un coupleur de rapport (T), la puissance réfléchie Pr est une portion d'une puissance réfléchie sur une surface d'une interface optique de sortie (Co) et à un port 2 du coupleur de rapport (T), P-mon est une quantité de détection de la puissance de sortie P et à un port 4 du coupleur de rapport (T), Pr-mon est une quantité de détection de la puissance réfléchie Pr à un port 3 du coupleur de rapport (T), et un rapport de spectre du coupleur de rapport (T) est x:y ;

le calcul d'un coefficient de réflexion R sur la base de la puissance de sortie P et de la puissance réfléchie Pr ;

la détermination si le coefficient de réflexion R ou la puissance réfléchie Pr dépasse un seuil donné ;

si tel est le cas, la fourniture et le signalement d'informations d'alarme, et l'ajustement de la puissance de sortie P de l'amplificateur optique à une valeur inférieure à une valeur de sécurité, et la poursuite de la détection de puissance, dans lequel la valeur de sécurité est une valeur pour éviter des détériorations d'équipement et des blessures de personnel provoquées par des défauts d'équipement ;

si tel n'est pas le cas, la détermination si un ajustement de puissance optique est nécessaire en fonction de la puissance de sortie P, et l'ajustement de la puissance de sortie à une valeur de configuration de la puissance de sortie lorsque cela est nécessaire ou le maintien de la détection de puissance,

dans lequel l'amplificateur optique comprend un ensemble de composants optiques (G1, G2) comprenant un dispositif de sortie de puissance (P1, P2), un isolateur (I), le coupleur de rapport (T) et l'interface optique de sortie (Co) ;

dans lequel les informations d'alarme comprennent au moins l'une de :

une puissance d'entrée réfléchie Pri entrant dans le dispositif de sortie de puissance (P1) est trop grande si la puissance d'entrée réfléchie Pri est supérieure à un seuil Pri-th de la puissance d'entrée réfléchie Pri, dans lequel la puissance d'entrée réfléchie Pri est une portion de la puissance réfléchie Pr entrant dans le dispositif de sortie de puissance (P1, P2) et est délivrée depuis le port 1 du coupleur de rapport (T), et le seuil Pri-th est préréglé pour l'amplificateur optique fonctionnant normalement ;

la puissance réfléchie Pr réfléchie et délivrée par l'interface optique de sortie (Co) est trop grande si la puissance réfléchie Pr est supérieure à un seuil Pr-th de la puissance réfléchie Pr, dans lequel le seuil Pr-th est défini sur la surface de l'interface optique de sortie (Co) ;

la fourniture d'une alarme que la puissance d'entrée réfléchie Pri dépasse une limite si le coefficient de réflexion R est inférieur à un premier seuil de coefficient de réflexion $R\text{-}th_1$ du coefficient de réflexion réfléchissant la puissance d'entrée réfléchie Pri, dans lequel le premier seuil de coefficient de réflexion $R\text{-}th_1$ est calculé sur la base de la puissance de sortie P et du seuil Pri-th de la puissance d'entrée réfléchie Pri.

**EP 1 560 065 B1**

**2.** Procédé de contrôle de sécurité d'amplification optique selon la revendication 1, dans lequel l'étape de la détermination si un ajustement de puissance optique est nécessaire en fonction de la puissance de sortie comprend :

la comparaison si une erreur entre une puissance de sortie actuelle et la valeur de configuration de la puissance de sortie respecte une tolérance ; si tel est le cas, l'indication que la puissance de sortie actuelle est normale et la non-exécution de l'ajustement de puissance optique ; sinon, l'exécution de l'ajustement de puissance optique.

**3.** Procédé de contrôle de sécurité d'amplification optique selon la revendication 2, dans lequel l'ajustement de puissance optique comprend en outre : la détermination si la puissance de sortie est supérieure à la valeur de configuration de la puissance de sortie ; si tel est le cas, la commande à la puissance de sortie d'être directement réduite à la valeur de configuration de la puissance de sortie en un ajustement ; sinon, l'augmentation de la puissance de sortie par incrément.

**4.** Procédé de contrôle de sécurité d'amplification optique selon la revendication 3, dans lequel un procédé d'ajustement par incrément est adopté pour augmenter la puissance de sortie de l'incrément dans le processus d'ajustement de la puissance optique, et la puissance de sortie est augmentée d'un incrément à la fois et la détection est effectuée simultanément ; la puissance de sortie est augmentée à la valeur de configuration de la puissance de sortie par incréments uniquement si aucune alarme n'est fournie au cours du processus d'ajustement de la puissance optique.

**5.** Procédé de contrôle de sécurité d'amplification optique selon la revendication 1, dans lequel l'ensemble de composants de sécurité (G1) comprend en outre un dispositif de combinaison d'ondes (W) entre le coupleur de rapport (T) et l'interface optique de sortie (Co), et une lumière de pompage est formée entre un port 1 du dispositif de combinaison d'ondes (W) et un port 3 du dispositif de combinaison d'ondes (W) et une lumière de signal est formée entre un port 2 du dispositif de combinaison d'ondes (W) et le port 3 du dispositif de combinaison d'ondes (W) ; et dans lequel les informations d'alarme comprennent en outre au moins l'une de :

une puissance de sortie réfléchie Pro délivrée depuis le port 2 du dispositif de combinaison d'ondes (W) est trop grande si la puissance de sortie réfléchie Pro est supérieure à un seuil Pro-th de la puissance de sortie réfléchie Pro, dans lequel la puissance de sortie réfléchie Pro est une portion de la puissance optique réfléchie par la surface d'une interface optique de sortie (Co), et le seuil Pro-th est préréglé pour l'amplificateur optique fonctionnant normalement ;
la fourniture d'une alarme que la puissance de sortie réfléchie Pro dépasse une limite si le coefficient de réflexion R est inférieur à un deuxième seuil de coefficient de réflexion R-th$_2$ du coefficient de réflexion réfléchissant la puissance de sortie réfléchie Pro, dans lequel le deuxième seuil de coefficient de réflexion R-th$_2$ est calculé sur la base de la puissance de sortie P et du seuil Pro-th de la puissance de sortie réfléchie Pro.

**6.** Procédé de contrôle de sécurité d'amplification optique selon la revendication 1, comprenant en outre : la prédéfinition d'un troisième seuil de coefficient de réflexion R-th$_3$, dans lequel Rc[dB]>R-th$_3$[dB] > max{R1[dB], R2[dB], R3[dB]}, Rc est un coefficient de réflexion lorsque la surface de l'interface optique de sortie (Co) présente une correspondance correcte, R1 est un coefficient de réflexion de la surface de l'interface optique de sortie (Co) exposée à l'air, R2 est un coefficient de réflexion lorsqu'il y a un espace entre des extrémités de fibre optique de l'interface optique de sortie (Co) même si une fibre optique extérieure est bien connectée, et R3 est un coefficient de réflexion lorsqu'une lumière de réflexion devient plus grande en raison d'une position de poussière de la surface de l'interface optique de sortie (Co), une plus grande tolérance d'assortiment de brides de l'interface optique de sortie (Co), des détériorations de parties de l'interface optique de sortie (Co) ou des avaries d'un câble extérieur de l'amplificateur optique ; la fourniture d'une alarme qu'un défaut de l'interface optique de sortie (Co) si le coefficient de réflexion R est inférieur au troisième seuil de coefficient de réflexion R-th$_3$ du coefficient de réflexion reflète un statut de fonctionnement de l'interface optique de sortie (Co).

**7.** Dispositif de contrôle de sécurité d'amplification optique, comprenant :

un ensemble de composants optiques (G1, G2) comprenant :

un dispositif de sortie de puissance (P1, P2) pour générer une lumière de pompage avec une grande puissance de sortie ;
un isolateur (I) pour assurer une transmission unidirectionnelle d'une puissance de sortie et limiter une contre-transmission de la puissance réfléchie ;

un coupleur de rapport (T) pour collecter une quantité de détection P-mon d'une puissance de sortie P et une quantité de détection Pr-mon d'une puissance réfléchie Pr, dans lequel la puissance de sortie P est délivrée depuis un dispositif de sortie de puissance (P1, P2) et à un port 1 du coupleur de rapport (T), la puissance réfléchie Pr est une portion de la puissance réfléchie sur une surface d'une interface optique de sortie (Co) et à un port 2 du coupleur de rapport (T), la quantité de détection P-mon est à un port 4 du coupleur de rapport (T) et la quantité de détection Pr-mon est à un port 3 du coupleur de rapport (T) ; et l'interface optique de sortie (Co) pour délivrer une puissance lumineuse à des fibres optiques extérieures ; et un circuit de traitement et de commande d'informations détectées (E), pour effectuer :

l'exécution d'une conversion d'informations pour la quantité de détection P-mon de la puissance de sortie P et la quantité de détection P-mon de la puissance réfléchie Pr,
la détection de la puissance de sortie P et de la puissance réfléchie Pr d'un amplificateur en fonction de la quantité de détection P-mon et de la quantité de détection P-mon,
le calcul d'un coefficient de réflexion R sur la base de la puissance de sortie P et de la puissance réfléchie Pr,
la détermination si le coefficient de réflexion R ou la puissance réfléchie Pr dépasse un seuil donné,
si tel est le cas, la fourniture et le signalement d'informations d'alarme,
et l'ajustement de la puissance de sortie P de l'amplificateur à une valeur inférieure à une valeur de sécurité,
et la poursuite de la détection de puissance, dans lequel la valeur de sécurité est une valeur pour éviter des dégradations d'équipement et des blessures de personnel provoquées par des défauts d'équipement lorsque la valeur configurée dépasse la valeur de sécurité,
si tel n'est pas le cas, la détermination si un ajustement de puissance optique est nécessaire en fonction de la puissance de sortie P ; si nécessaire, l'ajustement de la puissance de sortie à une valeur configurée de la puissance de sortie ; sinon, le maintien de la détection de puissance ;
dans lequel les informations d'alarme comprennent au moins l'une de :

une puissance d'entrée réfléchie Pri entrant dans le dispositif de sortie de puissance (P1) est trop grande si la puissance d'entrée réfléchie Pri est supérieure à un seuil Pri-th de la puissance d'entrée réfléchie Pri, dans lequel la puissance d'entrée réfléchie Pri est une partie de la puissance réfléchie Pr et est délivrée depuis le port 1 du coupleur de rapport (T), et le seuil Pri-th est pour une lumière réfléchie minimale cherchant à entrer dans le dispositif de sortie de puissance (P1) ;
la puissance réfléchie Pr réfléchie et délivrée par l'interface optique de sortie (Co) est trop grande si la puissance réfléchie Pr est supérieure à un seuil Pr-th de la puissance réfléchie Pr, dans lequel le seuil Pr-th est défini pour la surface de l'interface optique de sortie (Co) ;
la fourniture d'une alarme que la puissance d'entrée réfléchie Pri dépasse une limite si le coefficient de réflexion R est inférieur à un premier seuil de coefficient de réflexion R-th$_1$ du coefficient de réflexion réfléchissant la puissance d'entrée réfléchie Pri, dans lequel le premier seuil de coefficient de réflexion R-th$_1$ est calculé sur la base de la puissance de sortie P et du seuil Pri-th de la puissance d'entrée réfléchie Pri.

**8.** Dispositif de contrôle de sécurité d'amplification optique selon la revendication 7, dans lequel le circuit de traitement et de commande d'informations détectées (E) pour la détermination si un ajustement de puissance optique est nécessaire en fonction de la puissance de sortie effectue :

la comparaison si une erreur entre une puissance de sortie actuelle et la valeur de configuration de la puissance de sortie respecte une tolérance ; si tel est le cas, l'indication que la puissance de sortie actuelle est normale et la non-exécution de l'ajustement de puissance optique ; sinon, l'exécution de l'ajustement de puissance optique.

**9.** Dispositif de contrôle de sécurité d'amplification optique selon la revendication 7, dans lequel le dispositif de sortie de puissance (P1, P2) est un amplificateur pour commander la puissance de sortie en changeant un courant d'entraînement.

**10.** Dispositif de contrôle de sécurité d'amplification optique selon la revendication 9, dans lequel l'amplificateur pour commander la puissance de sortie par le changement du courant d'entraînement est un amplificateur discret se composant d'un ou plusieurs amplificateurs à fibre optique ou amplificateurs à semi-conducteurs ; et dans lequel le dispositif de contrôle de sécurité d'amplification optique comprend en outre une interface optique d'entrée pour entrer des signaux lumineux et délivrer les signaux lumineux entrés à l'amplificateur discret.

**11.** Dispositif de contrôle de sécurité d'amplification optique selon la revendication 9, dans lequel l'amplificateur pour commander la puissance de sortie par le changement du courant d'entraînement est un amplificateur RAMAN distribué qui est un groupe laser de pompage formé par une ou plusieurs sources laser.

**12.** Dispositif de contrôle de sécurité d'amplification optique selon la revendication 11, dans lequel l'ensemble de composants optiques (G1) comprend en outre un dispositif de combinaison d'ondes (W) entre le coupleur de rapport (T) et l'interface optique de sortie (Co) pour combiner une lumière de pompage et une lumière de signal, dans lequel la lumière de pompage est formée entre un port 1 du dispositif de combinaison d'ondes (W) et un port 3 du dispositif de combinaison d'ondes (W) et la lumière de signal est formée entre un port 2 du dispositif de combinaison d'ondes (W) et le port 3 du dispositif de combinaison d'ondes (W) ; et
dans lequel les informations d'alarme comprennent en outre au moins l'une de :

une puissance de sortie réfléchie Pro délivrée depuis le port 2 du dispositif de combinaison d'ondes (W) est trop grande si la puissance de sortie réfléchie Pro est supérieure à un seuil Pro-th de la puissance de sortie réfléchie Pro, dans lequel la puissance de sortie réfléchie Pro est une portion de la puissance optique réfléchie par la surface d'une interface optique de sortie (Co) et délivrée par le port 2 du dispositif de combinaison d'ondes (W), et le seuil Pro-th est pour une lumière réfléchie minimale cherchant à sortir du port 2 du dispositif de combinaison d'onde (W) ;
la fourniture d'une alarme que la puissance de sortie réfléchie Pro dépasse une limite si le coefficient de réflexion R est inférieur à un deuxième seuil de coefficient de réflexion R-th$_2$ du coefficient de réflexion réfléchissant la puissance de sortie réfléchie Pro, dans lequel le deuxième seuil de coefficient de réflexion R-th$_2$ est calculé sur la base de la puissance de sortie P et du seuil Pro-th de la puissance de sortie réfléchie Pro.

**13.** Dispositif de contrôle de sécurité d'amplification optique selon la revendication 7, dans lequel le circuit de traitement et de commande d'informations détectées (E) comprend :

un dispositif de conversion photoélectrique (PD1, PD2) pour convertir respectivement la quantité de détection P-mon de la puissance de sortie P et la quantité de détection P-mon de la puissance réfléchie Pr en signaux de détection analogiques correspondants ;
un circuit de conversion analogique-numérique (C1) pour convertir respectivement les signaux de détection analogiques transmis du dispositif de conversion photoélectrique (PD1, PD2) en signaux numériques correspondants ;
une unité de commande (CS) pour détecter la puissance de sortie P et la puissance réfléchie Pr de l'amplificateur en fonction des signaux numériques transmis depuis le circuit de conversion analogique-numérique (C1), calculer le coefficient de réflexion R en fournissant automatiquement des instructions de commandes de puissance en fonction du coefficient de réflexion, et effectuer une commande de puissance pour l'ensemble de composants optiques et fournir des inspections de détection de capacité ;
un circuit de commande de puissance et de collecte de performances de l'ensemble de composants optiques (C2) pour recevoir des instructions de commande de puissance fournies par l'unité de commande (CS) et, après la conversion analogique-numérique, commander automatiquement la puissance de parties optiques, recevoir des instructions de détection de capacité fournies par l'unité de commande (CS), détecter la capacité des parties optiques, et entrer les informations obtenues par la conversion analogique-numérique dans l'unité de commande (CS).

**14.** Dispositif de contrôle de sécurité d'amplification optique selon la revendication 13, dans lequel l'unité de commande (CS) comprend une interface de communication reliant l'unité de commande à un bus de communication d'appareil, signale des informations relatives au statut de fonctionnement du dispositif d'amplification optique au système de gestion d'appareil et reçoit des informations de commande du système de gestion d'appareil.

**15.** Dispositif de contrôle de sécurité d'amplification optique selon la revendication 13, dans lequel le circuit de commande de puissance et de collecte de performances de l'ensemble de composants optiques (C2) comprend des interfaces électriques reliant le circuit de commande de puissance et de collecte de performances de l'ensemble de composants optiques à chaque dispositif optique, pour actualiser la commande de puissance et la collecte de performances.

Figure 1

Figure 2

Figure 3

Figure 4

Step 1: start up the device, introduce a default data, and control the power to the default

Step 2: detect the power, and calculate the reflection power and the reflection coefficient

Step 3: determine whether the reflection goes beyond the threshold, if yes go to step 4, else go to step 5

Step 4: safety control process, and perform optical power control under the control of CPU system so as to reduce the output optical power under the safety value; meanwhile, output alarm if necessary

Step 5: optical power adjustment process, if |P-Pc|<err (wherein err is the allowed adjustment error), go to step 6 directly; otherwise adjust the power: if P>Pc, reduce the output power directly to Pc under the control of CPU system; if P<Pc, adjust P=P+d, and go to step 6 after accomplishment

Step 6: query the instruction stacks relating to I/O interface in CPU system, and deal with the message if there is any

Figure 5

**EP 1 560 065 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6417965 B
- EP 0954125 A2
- EP 1229382 A1